# EUROPÄISCHE PATENTSCHRIFT

(11) **EP 3 995 278 B1**
(45) Veröffentlichungstag und Bekanntmachung des Hinweises auf die Patenterteilung: **19.07.2023**
(21) Anmeldenummer: 20205695.8
(22) Anmeldetag: 04.11.2020
(51) Int. Cl.: B29B 7/42, B29B 7/60, B29B 7/74, B29B 7/84, B29B 7/86, B29C 48/375, B29C 48/385, B29C 48/40, B29C 48/76, B29C 48/92

(54) **VERFAHREN UND VORRICHTUNG ZUR VERARBEITUNG VON POLYKONDENSATEN**
METHOD AND DEVICE FOR PROCESSING POLYCONDENSATES
PROCÉDÉ ET DISPOSITIF DE TRAITEMENT DE POLYCONDENSATS

(43) Veröffentlichungstag der Anmeldung: 11.05.2022
(73) Patentinhaber: SML Maschinengesellschaft m.b.H., 4846 Redlham (AT)
(72) Erfinder: Leingartner, Julian, 4849 Puchkirchen (AT); Luger, Hans-Jürgen, 4020 Linz (AT); Lutz, Max Philip, 4813 Altmünster (AT)
(74) Vertreter: Gosdin, Carstensen & Partner Patentanwälte Partnerschaftgesellschaft mbB

(56) Entgegenhaltungen:
- EP-A1- 1 440 783
- WO-A1-2012/051639
- CN-A- 101 671 412
- DD-A5- 280 500
- DE-A1- 4 232 616
- DE-C1- 3 744 193
- HENSEN F [DE] ET AL: "KASKADEN-EXTRUSIONSSYSTEME VERBESSERN DEN EXTRUSIONPROZESS", KUNSTSTOFFE, CARL HANSER VERLAG, MUNCHEN, DE, Bd. 80, Nr. 6, 1. Juni 1990 (1990-06-01), Seiten 673-678, XP000159858, ISSN: 0023-5563

## Beschreibung

Die Erfindung betrifft ein Verfahren zur Verarbeitung von Polykondensaten, insbesondere von Polyethylenterephthalat, mit dem das Material in Form von Granulat oder in Form von Rezyklat zu einer Schmelze verarbeitet wird. Des Weiteren betrifft die Erfindung eine Vorrichtung zur Verarbeitung von Polykondensaten.

Ein gattungsgemäßes Verfahren und eine entsprechende Vorrichtung sind aus der DE 42 32 616 A1 bekannt.

Durch Polykondensation hergestellte Polymere, wie beispielsweise Polyethylenterephthalat (PET), sind hygroskopisch und neigen daher zur Wasseraufnahme. Im Material enthaltenes Wasser, niedermolekulare Anteile sowie entstehende Spaltprodukte führen bei der Verarbeitung zur Verkürzung der Molekülketten und somit Verringerung der Viskosität. Für die weitere Verarbeitung ist eine ausreichend hohe Viskosität, beispielsweise messbar an Hand des sog. IV-Wertes, notwendig. Darüber hinaus sind auch die mechanischen und physikalischen Eigenschaften des Endprodukts durch die in der Verarbeitung erfolgte Materialdegradation bestimmt. Prozesstechnisch sind somit eine möglichst schonende Materialverarbeitung sowie die Verhinderung des hydrolytischen Materialabbaus essentiell. Der qualitätsbestimmende Faktor ist die Entfernung von Wasser und von anderen flüchtigen Bestandteilen vor und während der Verarbeitung.

Besonders kritisch hinsichtlich des Materialabbaus sind Prozesse, bei welchen Materialien mit geringer Ausgangsviskosität verarbeitet werden. Dies betrifft vor allem die Verarbeitung von Rezyklat, welches durch einen oder mehrere vorangegangene Verarbeitungsprozesse bereits geschädigt wurde. Speziell für das Material PET besteht hier eine große industrielle Relevanz, da heutzutage große Mengen an Flaschen- und Folienmahlgut verarbeitet werden.

Die Verarbeitung von Rezyklaten bringt prozesstechnisch die Herausforderung mit sich, dass diese teils erheblichen Materialschwankungen, vor allem mit Blick auf das Ausgangsmaterial, unterliegen. Für einen stabilen Verarbeitungsprozess muss eine derartige Anlage einerseits niedrige Schüttdichten und andererseits Schüttdichteschwankungen berücksichtigen können.

Bekannt ist es hierbei, dass bei der Verarbeitung von Polykondensaten, insbesondere von PET, der Extrusion Trocknungsanlagen mit einer Durchlaufzeit von mindestens 4 bis 6 Stunden sowie Prozesstemperaturen von ca. 160 °C verwendet werden. Diese sind jedoch in der Anschaffung und im Betrieb (insbesondere unter dem Aspekt des Energieaufwands) kostspielig. Im Falle von Rezyklat in Form von Folien- oder Flaschenmahlgut werden der Trockungsprozess sowie das Materialhandling zudem sehr komplex. Bei direkter Beschickung von Extrudern führen Schüttdichteschwankungen zu erheblichen Prozessschwankungen.

Weiterhin sind verschiedene Lösungen bekannt geworden, um die hier auftretenden Probleme zu lösen und namentlich einen Trocknungsprozess zu vermeiden.

In der DD 280 500 A5 wird ein Verfahren beschrieben, welches die Dosierung unter Vakuum mittels eines Extruders, vorzugsweise eines Doppelschneckenextruders, beschreibt. Dabei wird vorgesehen, dass das Material durch die Schneckenförderung unter Schmelztemperatur geknetet, erwärmt und entgast wird. Nachteil ist es hierbei, dass die Entgasungsleistung unterhalb der Schmelztemperatur begrenzt ist.

Erhöht wird die Entgasungsleistung gemäß der WO 2012/051639 A1 durch Vorwärmung des Materials mittels eines beheizten Vorratsbehälters, welcher der Dosiervorrichtung bzw. der Dosierschnecke vorgeschaltet ist. In beiden Fällen erfolgt die weitere Verarbeitung mittels Ein- oder Doppelschneckenextruder, welche mit einer oder mehreren Entgasungszonen ausgestattet sind.

Vorbekannt ist es weiterhin, dass der Druckaufbau von einer Schmelzepumpe übernommen wird, um den Schereintrag und somit den Materialabbau in der Materialaustragszone des Extruders zu verringern. Im Gegensatz zur Zwangsförderung einer Schmelzepumpe ist der Pumpwirkungsgrad eines Extruders, vor allem im Falle eines gleichlaufenden Doppelschneckenextruders, bedingt durch den Fördermechanismus auf Basis von Schlepp- und Druckströmung geringer. In Kombination mit eingebrachter Feuchtigkeit im Material führen Scherung, lange Verweilzeit und hohe Schmelzetemperaturen zu raschem Materialabbau. Nachteile einer Schmelzepumpe sind jedoch die schlechte Selbstreinigung der Zahnräder sowie die Stagnation des Materials in den Gleitlagerungen. Dies führt ebenso zu Materialabbau, welcher sich in einer Gelbfärbung oder einer Erhöhung von Spaltprodukten wie beispielsweise Acetaldehyd (AA) auswirkt.

Zur Erhöhung der Entgasungsleistung wird in der EP 1 226 922 B1 ein gleichlaufender Doppelschneckenextruder mit mehreren Entgasungszonen (atmosphärisch und unter Vakuum) vorgeschlagen, wobei auf die Vortrockung des Materials verzichtet wird. In der EP 1 440 783 A1 wird in ähnlicher Bauweise ein gleichlaufenden Doppelschneckenextruder mit Entgasung zur Produktion von PET-Verpackungsbändern vorgeschlagen. Ebenso sind modifizierte Einschneckenextruder mit erhöhter Entgasungsleistung bekannt.

Beispielsweise wird in der DE 10 2013 019 611 A1 und in der DE 10 2018 128 884 A1 ein sogenanntes Rotor- bzw. Satellitenelement verwendet, in welches mehrere Mischschnecken eingelegt werden. Nachteil dieses Systems ist dabei wiederum die Gefahr von Materialablagerungen in Totstellen sowie ein breites Verweilzeitspektrum.

Darüber hinaus ist es aus dem Beitrag F. Hensen und W. Imping "Kaskaden-Extrusionssysteme verbessern den Extrusionsprozess" (Kunststoffe 80.6 (1990), Seiten 673 bis 678) bekannt, die verschiedenen Verfahrensschritte zur Schmelzeaufbereitung im Extrusionsprozess auf zwei oder mehrere nacheinander geschaltete Extruder aufzuteilen. Vorteil einer derartigen Extruder-Kaskade ist, dass jeder Extruder maschinenbaulich als auch prozesstechnisch auf den jeweiligen Verfahrensschritt angepasst werden kann. Zu diesem Zweck wird in der eingangs erwähnten DE 42 32 616 A1 eine dreistufige Extruder-Kaskade vorgeschlagen, in welcher ein gleichlaufender Doppelschneckenextruder für die Entgasung des aufgeschmolzenen Kunststoffs verwendet wird. Zum Aufschmelzen wird ein Einschneckenextruder und zum Materialaustrag ein Einschneckenextruder oder eine Schmelzepumpe vorgeschlagen.

Im Allgemeinen ist aber der überwiegende Nachteil von Extrusionssystemen, welche auf Vortrocknung verzichten bzw. Entgasung nur im aufgeschmolzenen Zustand durchführen, dass die vorhandene Feuchtigkeit zu einer erheblichen Materialschädigung im Aufschmelzprozess führt. Diese überschreitet erfahrungsgemäß sehr schnell das für die finale Produktqualität akzeptable Niveau. Um dem entgegenzuwirken, sind auch Methoden bekannt, welche einen Viskositätsaufbau, d. h. die Umkehr der Abbaureaktion ermöglichen. Es wird dabei zwischen Polykondensationsreaktionen im festen ("Solid State Polycondensation" - SSP) und flüssigem Materialzustand ("Liquid State Polycondensation" - LSP) unterschieden. In der EP 3 274 148 B1 ist eine Anlage zur Durchführung der LSP beschrieben (auf dieses Dokument wird im Lichte der nachfolgenden Ausführungen ausdrücklich Bezug genommen). Nachteil dieses Systems ist es, dass sich sehr lange Verweilzeiten und Materialwechselzeiten ergeben, wodurch die Produktionsflexibilität eingeschränkt wird. Die lange Verweilzeit führt beispielsweise bei PET durch parallel fortlaufende Reaktionen zur Bildung von konjugierten Doppelbindungen in den Molekülketten und somit zur Gelbfärbung der Schmelze. Ein vorhergehendes Aufschmelzen von ungetrocknetem, feuchtem Material führt zu einer weiteren Erhöhung der Verweilzeit, da der Viskositätsverlust wieder durch eine verlängerte Reaktionszeit kompensiert werden muss.

Ebenso sind Anlagen und Verfahren unter Nutzung der SSP bekannt. Diese können dem Extrusionsprozess vor- als auch nachgeschaltet sein. Im Falle der Vorschaltung und der Verarbeitung von Mahlgut liegt ein wesentlicher Nachteil des Prozesses darin, dass die erreichbare Viskositätserhöhung wesentlich mit der Größe und Form des Materials in Zusammenhang steht. Somit erlaubt der SSP-Prozess nur geringe Variationen der Schüttdichte, um eine konstante Materialqualität zu erhalten. Ebenso besteht im Falle von PET-G die Gefahr, dass das Mahlgut über der Glasübergangstemperatur verklebt. Daher werden Rührwerke verwendet, wie beispielsweise in der AT 411 235 B und in der AT 413 965 B beschrieben. Die vorgeschlagenen Prozesse erlauben zwar eine Viskositätserhöhung, jedoch liegen in der vorhandenen Extrusionseinheit mit Ein- oder Doppelschneckenextruder und Schmelzepumpe die bereits genannten Nachteile vor. Darüber hinaus ist die Prozessführung sehr komplex, Materialwechselzeiten ebenso hoch und in Summe wird die Viskositätserhöhung im SSP-Reaktor meist durch Materialschädigung in der Extrusion aufgehoben.

Der Erfindung liegt daher die **Aufgabe** zugrunde, ein Verfahren und eine Vorrichtung der eingangs genannten Art bereitzustellen, mit dem bzw. mit der es möglich ist, den Viskositätsverlust durch hydrolytischen Abbau möglichst gering zu halten und eine Produktion mit ausreichender Materialqualität zu erlauben.

Ferner wird angestrebt, eine kurze Verweilzeit, ein enges Verweilzeitspektrum, ein effizientes Entgasen, ein schonendes Aufschmelzen und einen effizienten Druckaufbau zu erreichen.

Im Gegensatz zu großvolumigen Trocknungsanlagen sowie Reaktoren (SSP, LSP) sollen kurze Material- und Rezepturwechsel realisierbar sein. Darüber hinaus soll für die kombinierte Verarbeitung von Neuware (Granulat) und Rezyklat (Mahlgut) eine größtmögliche Flexibilität erreicht werden (Reaktoren für das LSP und das SSP ermöglichen nur eine Viskositätserhöhung, deren Ausmaß von der Prozessführung abhängig ist). Auf Grund der langen Verweilzeit in der Schmelzephase hat der LSP-Prozess den Nachteil einer hohen Gelbfärbung. Sowohl bei SSP- als auch LSP-Prozessen wird zum Materialaustrag meist eine Schmelzepumpe verwendet, welche Totzonen mit stagnierender Schmelze aufweist. Dies verursacht wiederum Materialdegradation, Gelbfärbung und Bildung von unerwünschten Spaltprodukten (beispielsweise Acetaldehyd). Aufgabe der Erfindung ist somit weiterhin, einen Verzicht auf eine Schmelzepumpe zu ermöglichen.

Die **Lösung** dieser Aufgabe durch die Erfindung ist dadurch gekennzeichnet, dass das Verfahren nach Anspruch 1 die Abfolge der folgenden Schritte umfasst:
a) Zuführen des Materials in eine Vakuumschleuse, in der das Material unter einem gegenüber dem Umgebungsdruck verminderten Druck gehalten wird;
b) Fördern des Materials von der Vakuumschleuse in einen ersten Extruder, der einen Einfüllbereich und eine Einzugszone aufweist, wobei der Einfüllbereich und die Einzugszone unter einem gegenüber dem Umgebungsdruck verminderten Druck gehalten wird und wobei das Material im ersten Extruder zumindest teilweise, vorzugsweise vollständig, aufgeschmolzen wird;
c) Fördern des zumindest teilweise aufgeschmolzenen Materials vom ersten Extruder in einen zweiten Extruder, wobei der zweite Extruder als Doppelschneckenextruder ausgeführt ist und die beiden Schnecken des zweiten Extruders gegensinnig gedreht werden, wobei der zweite Extruder zumindest eine Entgasungszone und eine sich in Förderrichtung anschließende Meteringzone aufweist, wobei in der Entgasungszone das aufgeschmolzene Material entgast wird und das aufgeschmolzene Material in der Meteringzone unter Druck gesetzt und aus dem zweiten Extruder ausgebracht wird.

Vorzugsweise ist zwischen der Vakuumschleuse und dem ersten Extruder ein Dosierelement angeordnet, wobei mittels des Dosierelements das Material von der Vakuumschleuse in den ersten Extruder mit einem vorgegebenen Massen- oder Volumenstrom (Masse oder Volumen an Material pro Zeit) gefördert wird. Das Material wird dabei besonders bevorzugt vom Dosierelement in den ersten Extruder mit einem solchen Massen- oder Volumenstrom gefördert, dass die Einzugszone des ersten Extruders nicht vollständig mit Material gefüllt ist; bevorzugt ist hier eine maximale Füllmenge von 95 % (oder sogar von nur 90 %) vorgesehen, d. h. das Volumen der Schneckengänge, welches Material aufnehmen kann, wird mit maximal 95 % (oder sogar mit nur 90 %) mit Material gefüllt.

Der Druck in der Vakuumschleuse und/oder im Einfüllbereich des ersten Extruders beträgt bevorzugt maximal 100 mbar, wobei besonders bevorzugt ein Bereich des Drucks zwischen 0,1 mbar und 10 mbar vorgesehen ist. Der Druck in der Entgasungszone des zweiten Extruders beträgt bevorzugt maximal 100 mbar, besonders bevorzugt maximal 30 mbar.

Als erster Extruder kommt bevorzugt ein Einschneckenextruder zum Einsatz, wenngleich auch ein Mehrschneckenextruder möglich ist.

Das Material wird vorzugsweise zwischen dem ersten Extruder und dem zweiten Extruder gefiltert. Weiterhin kann vorgesehen werden, dass das Material nach dem zweiten Extruder gefiltert wird.

Eine bevorzugte Weiterbildung des vorgeschlagenen Verfahrens sieht vor, dass die Viskosität des Materials zwischen dem ersten Extruder und dem zweiten Extruder mittels eines Rheometers gemessen wird. In ähnlicher Weise kann additiv oder alternativ die Viskosität des Materials hinter dem zweiten Extruder mittels eines Rheometers gemessen werden. In diesem Falle kann dann vorgesehen sein, dass in Abhängigkeit der gemessenen Viskosität des Materials hinter dem ersten Extruder und/oder hinter dem zweiten Extruder mindestens ein Prozessparameter verändert wird, vorzugsweise im geschlossenen Regelkreis. Der Prozessparameter ist dabei insbesondere der Unterdruck im Einfüllbereich und/oder in der Einzugszone des ersten Extruders. Weiterhin kann der Prozessparameter der Unterdruck in der Entgasungszone des zweiten Extruders sein. Damit ist es möglich eine ständige Qualitätsüberwachung der herzustellenden Schmelze vorzunehmen und deren Eigenschaften (automatisch) in einem vorgegebenen Bereich zu halten.

Hinter dem zweiten Extruder kann ein Mittel zur Erhöhung des Drucks, insbesondere eine Schmelzepumpe, angeordnet sein und der Druck im Material mit diesem Mittel erhöht werden.

Das Material kann vor seiner Zuführung in die Vakuumschleuse getrocknet werden, insbesondere mittels eines Vakuumtrockners oder eines Infrarot-Trockners.

Als weitere vorteilhafte Maßnahme kann vorgesehen werden, dass nach der Zuführung des Materials in die Vakuumschleuse eine Erhöhung der Viskosität des Materials durch Polykondensation im festen Zustand (SSP) erfolgt. In analoger Weise ist es auch möglich, dass nach dem Aufschmelzen des Materials im ersten Extruder und/oder im zweiten Extruder eine Erhöhung der Viskosität des Materials durch Polykondensation im flüssigen Zustand (LSP) vorgenommen wird.

Die Vorrichtung nach Anspruch 18 zur Verarbeitung von Polykondensaten, insbesondere von Polyethylenterephthalat, mit dem das Material in Form von Granulat oder in Form von Rezyklat zu einer Schmelze verarbeitet werden kann, umfasst einen ersten Extruder, der einen Einfüllbereich und eine Einzugszone aufweist, und einen dem ersten Extruder nachgelagerten zweiten Extruder, wobei der zweite Extruder als Doppelschneckenextruder ausgeführt ist und wobei der zweite Extruder zumindest eine Entgasungszone aufweist, wobei die Vorrichtung erfindungsgemäß gekennzeichnet ist durch eine Vakuumschleuse, in der das Material unter einem gegenüber dem Umgebungsdruck verminderten Druck gehalten werden kann, wobei der erste Extruder der Vakuumschleuse nachgelagert ist, wobei im zweiten Extruder die beiden Schnecken zum gegensinnigen Drehen ausgebildet sind und wobei der zweite Extruder eine sich der Entgasungszone in Förderrichtung anschließende Meteringzone aufweist.

Zwischen der Vakuumschleuse und dem ersten Extruder kann ein Dosierelement zum Fördern des Materials mit vorgegebenem Massen- oder Volumenstrom angeordnet sein.

Der erste Extruder ist bevorzugt ein Einschneckenextruder.

Zwischen dem ersten Extruder und dem zweiten Extruder kann ein Filter angeordnet sein. Weiterhin kann hinter dem zweiten Extruder ein Filter angeordnet sein.

Zwischen dem ersten Extruder und dem zweiten Extruder kann ein Rheometer zur Messung der Viskosität des Materials angeordnet sein. Weiterhin kann hinter dem zweiten Extruder ein Rheometer zur Messung der Viskosität des Materials angeordnet sein.

Hinter dem zweiten Extruder kann ferner ein Mittel zur Erhöhung des Drucks, insbesondere eine Schmelzepumpe, angeordnet sein. Vorzugsweise wird aber auf solche Mittel verzichtet.

Die vorliegende Idee bezieht sich somit auf ein Verfahren und eine Anlage zur Verarbeitung von Polykondensaten, insbesondere von PET, in Form von Granulat oder Rezyklat (z. B. Flaschen- oder Folienmahlgut). Dabei wird das Ausgangsmaterial, welches in ungetrocknetem Zustand vorliegen kann, über die Vakuumschleuse einem unter Vakuum stehenden Dosiergerät, z. B. Schneckenförderer, zugeführt. Über das Dosiergerät erfolgt die Beschickung des ersten Extruders, vorzugsweise eines Einschneckenextruder, in welchem das Material entgast, komprimiert und aufgeschmolzen wird. Die vorgeschaltete Dosierung ermöglicht es, den ersten Extruder in unterfütterter Fahrweise zu betreiben, d. h. mit nur teilgefüllten Schneckengängen, insbesondere über einen erheblichen Abschnitt der Längserstreckung des Extruders. Insbesondere bei gleichzeitiger Vorwärmung ist es somit möglich, das Material weiterhin unter Vakuum effizient zu entgasen, wobei diese Entgasung "rückwärts", d. h. entgegen der Förderrichtung, erfolgt. Anschließend wird das Material in schmelzeförmigem Zustand einem gegenlaufenden Doppelschneckenextruder, d. h. dem zweiten Extruder, zugeführt. Im Doppelschneckenextruder wird die Schmelze unter Ausnutzung der Koaleszenz, großer Oberfläche und langer Verweilzeit zusätzlich entgast; in der Meteringzone des zweiten Extruders wird durch die gegebene Zwangsförderung der notwendige Extrusionsdruck aufgebaut.

Vorbekannte Lösungen setzen auf hohe Entgasungsleistung in der Schmelzephase, beispielsweise durch Verwendung von gleichlaufenden Doppelschneckenextrudern oder speziellen Mischelementen mit mehreren Schnecken. Der Vorteil der vorliegenden Erfindung liegt im Unterschied hierzu darin, dass ein wesentlicher Anteil der im Material enthaltenen Feuchtigkeit und flüchtigen Anteile vor dem Aufschmelzprozess entzogen und somit der hydrolytische Abbau verhindert wird. Mit der vorgeschlagenen Lösung erfolgt die Entgasung in der Schmelzephase bei wesentlich niedrigeren Schneckendrehzahlen als bei vorbekannten Lösungen. Dies ermöglich im Vergleich zu bekannten Lösungen längere Verweilzeiten in der Entgasungszone und somit eine gesteigerte Entgasungsleistung. Neben der Erhöhung der Diffusion wird dadurch auch der makroskopische Stofftransport in Form von Gasblasen erhöht, da im Vergleich zu schnelllaufenden Extrudern keine Dispergierung von Gasblasen stattfindet. Ebenso wird im gleichen Extruder durch Zwangsförderung ein effizienter Druckaufbau ermöglicht. Im Vergleich zu einer Schmelzepumpe liegt im Extruder gemäß der vorliegenden Erfindung eine wesentlich bessere Selbstreinigung vor.

Dadurch wird wiederum der Materialabbau mit den einhergehenden Auswirkungen auf die Materialqualität verhindert.

Bei großer Dimensionierung der Entgasungszone, ist ein Viskositätsaufbau durch eine LSP-Reaktion möglich. Dabei ermöglich die Ausführung der Schneckengeometrie ein enges Verweilzeitspektrum und eine gute Selbstreinigung.

Ebenso ist es möglich, eine gesonderte Vorrichtung zur Realisierung des Viskositätsaufbaus durch LSP zwischen erstem und zweitem Extruder der Kaskade zu implementieren. In diesem Fall kann die Entgasungszone des Doppelschneckenextruders entfallen und dieser lediglich zum schonenden Schmelzeaustrag und Druckaufbau verwendet werden.

Bei entsprechender Ausführung des Volumens nach der Vakuumschleuse zu Beginn der Anlage, kann vor dem Aufschmelzen eine Viskositätserhöhung durch eine SSP-Reaktion realisiert werden.

Somit umfasst das vorgeschlagene Konzept insbesondere eine Vakuumschleuse, eine evakuierte Dosiereinheit, sowie zwei nacheinander (in Kaskade) geschaltete Extruder. Die Entgasung vor dem Aufschmelzen des Materials erfolgt in der unter Vakuum stehenden Dosiereinheit sowie der Einzugszone des ersten Extruders (vorzugsweise ausgeführt als Einschneckenextruder). Der Vorteil der Dosiereinheit ist, dass diese auf Grund ihrer Kompaktheit kurze Materialwechselzeiten erlaubt. Darüber hinaus kann im Rahmen des Dosiervorgangs sehr rasch auf Schüttdichteschwankungen regelungstechnisch reagiert werden.

Die Verwendung der Dosiereinheit erlaubt eine unterfütterte Fahrweise des ersten Extruders, wodurch der Einzugsbereich ebenfalls unter Vakuum steht. Ein relevanter Aspekt ist dabei, dass der Entgasungsvorgang bei gleichzeitiger Erwärmung des Materials durch Friktion (eingebracht durch die sich drehende Schnecke sowie über die Zylinderheizung des ersten Extruders) erfolgt. Die gleichzeitige Erwärmung bewirkt eine wesentliche Erhöhung der Diffusion im Material und ist somit wesentlich effizienter als vorgeschaltete Trockungsanlagen, welche die Energie über erwärmte Luft einbringen müssen.

Diese Einzugszone des ersten Extruders ist dabei wesentlich länger ausgeführt als bei konventionellen Extrudern. Im zweiten Abschnitt des ersten Extruders erfolgen schnelles und schonendes Aufschmelzen sowie eine Materialhomogenisierung.

Ein weiteres wesentliches Merkmal der vorgeschlagenen Lösung der beschriebenen Extruder-Kaskade ist die Verwendung eines Doppelschneckenextruders mit gegensinnig drehenden Schnecken. Dieser Extruder, welcher mit Polymerschmelze beschickt wird, wird zum Entgasen der Schmelze und zum Druckaufbau verwendet. Beim gegenlaufenden Doppelschneckenextruder ergeben sich durch die geringen Drehzahlen die oben genannten Vorteile im Entgasungsprozess. Es wird die Koaleszenz des in der Schmelze gebundenen Gases zu Blasen gefördert, welche durch die vorliegende Drehströmung an die Oberfläche befördert werden. Dadurch entweichen die Gasblasen in die Atmosphäre bzw. werden durch das anliegende Vakuum abgesaugt. Dieser makroskopische Gastransport ist wesentlich effizienter als ein rein diffusiver Gastransport.

Ein weiterer Vorteil des gegenlaufenden Doppelschneckenextruders ist, dass auf Grund der Schneckengeometrie abgeschlossene Förderkammern entstehen und daher die Austrags- bzw. Meteringzone von der Funktion gleich einer Schmelzepumpe ist. D. h. es liegt, abgesehen von Leckströmungen, eine Zwangsförderung vor und somit kann der Durchsatz kontrolliert bzw. gesteuert werden. Ein weiterer Vorteil der Schneckengeometrie ist, dass eine Selbstreinigung durch gegenseitiges Abschaben der Schnecken gegeben ist. Schmelzepumpen sind in der Regel durch das geförderte Polymer geschmiert. In den Gleitlagern unterliegt das Material jedoch dauerhafter Scherung und somit einer Degradation. Neben der engen Verweilzeit und der Selbstreinigung ist der Druckaufbau wesentlich effizienter als bei einer Kombination einer Schmelzepumpe mit einem Ein- oder Doppelschneckenextruder, welche durch die Förderung mittels Schlepp-/Druckströmung zudem einen erhöhten Schereintrag einbringen.

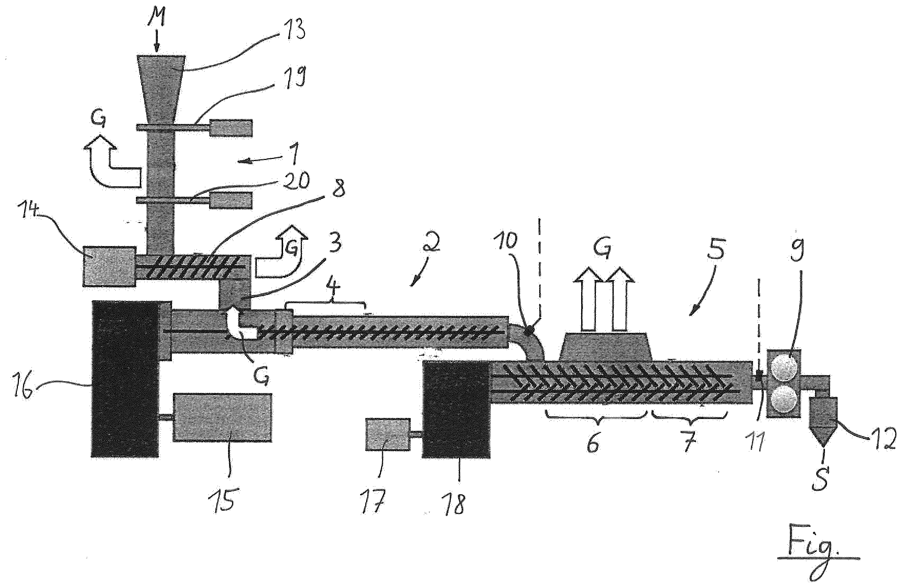

In der Zeichnung ist ein Ausführungsbeispiel der Erfindung dargestellt. Die einzige Figur zeigt schematisch den Aufbau einer Vorrichtung zur Herstellung einer Schmelze aus einem Granulat bzw. Recyklat von PET.

In der Figur ist eine Vorrichtung gezeigt, mit der ein Ausgangsmaterial M in Form eines Granulats oder eines Recyklats zu einer Schmelze S verarbeitet wird. Aus der Schmelze S kann dann beispielsweise eine Kunststofffolie produziert werden, wozu schematisch eine Düse 12 zur Flachfolienextrusion angedeutet ist.

Das Material M wird über einen Einfülltrichter 13 einer Vakuumschleuse 1 zugeführt, die das Material M unter einem gegenüber dem Umgebungsdruck verminderten Druck hält. Angedeutet ist, dass der Bereich der Vakuumschleuse 1 Gas G abführt. Prinzipiell arbeitet die Vakuumschleuse 1 mittels zweier Schieber 19 und 20, durch die ein hermetisch abgeschlossener Raum hergestellt werden kann, der mittels einer (nicht dargestellten) Pumpe evakuiert werden kann. Durch entsprechende Ansteuerung der Schieber 19, 20 kann so das Material M unter einem Unterdruck gehalten werden. Beim Öffnen des Schiebers 20 pflanzt sich der Unterdruck demgemäß auch nach unten in Richtung eines Dosierelements 8 fort.

Das Material M gelangt im Anschluss an die Vakuumschleuse 1, also immer noch unter Unterdruck stehend, zu dem Dosierelement 8, welches von einem Antriebsmotor 14 angetrieben wird und welches im Ausführungsbeispiel als Schneckenfördereinheit ausgebildet ist. Mit dem Dosierelement 8 kann eine vorgegebene Menge Material M pro Zeit gefördert und dem weiteren Prozess zugeführt werden. Durch den weiterhin anliegenden Unterdruck auch im Bereich des Dosierelements 8 wird weiter Gas G dem Material M entzogen.

Vom Dosierelement 8 gelangt das Material M in einen ersten Extruder 2, der einen Einfüllbereich 3 sowie eine Einzugszone 4 aufweist. Der erste Extruder 2 ist über einen Antriebsmotor 15 und ein Getriebe 16 angetrieben. Im ersten Extruder 2 wird das Material M mit einem solchen Massen- oder Volumenstrom (Masse bzw. Volumen an Material M pro Zeit) zugeführt, dass die Schneckengänge des ersten Extruders nur teilweise gefüllt sind (unterfütterte Fahrweise). Gleichzeitig erfolgt durch die Rotation der Schnecke des ersten Extruders 2 sowie durch eine nicht dargestellte Heizung des Schneckenzylinders des Extruders 2 ein Aufschmelzen des Materials M. Durch die nur teilweise Füllung der Schneckengänge in der Einzugszone des ersten Extruders 2 kann eine effektive Entgasung des Materials M erfolgen, was in der Figur angedeutet ist (Abfuhr des Gases G). Die Entgasung des Materials M erfolgt also entgegen der Förderrichtung des ersten Extruders 2. Die Entgasgung erfolgt somit über die Einfüllöffnung bzw. die Dosiereinheit 8. Im zweiten Abschnitt der Schnecke des ersten Extruders 2, der sich an die Einzugszone 4 in Förderrichtung anschließt, wird das Material komprimiert, aufgeschmolzen und homogenisiert. Weiterhin erfolgt hier der nötige Druckaufbau, um die Polymerschmelze weiter zu fördern.

Das nunmehr aufgeschmolzene Material M gelangt am Ende des ersten Extruders 2 in einen zweiten Extruder 5, der als Doppelschneckenextruder mit gegenläufig rotierenden Schnecken ausgebildet ist. Der zweite Extruder 5 ist von einem Antriebsmotor 17 über ein Getriebe 18 angetrieben (d. h. namentlich die beiden Schnecken des Extruders) und weist eine Entgasungszone 6 sowie eine Meteringzone 7 auf. In der Entgasungszone 6 erfolgt eine weitere Abfuhr von Gas G aus der Schmelze. In der Meteringzone 7 wird in der Schmelze Druck aufgebaut, um die Schmelze aus dem zweiten Extruder 5 auszufördern. Der zweite Extruder 5 sorgt also für ein Entgasen der Schmelze sowie für den Materialaustrag und den Druckaufbau im Material M.

Hinter dem zweiten Extruder 5 ist ein Filter 9 angedeutet, welcher die Schmelze S filtert. Es ist indes keine Schmelzepumpe hinter dem zweiten Extruder 5 mehr vorgesehen, da der erforderliche Druck in der Schmelze vom zweiten Extruder 5 aufgebaut wird.

Zwischen dem ersten Extruder 2 und dem zweiten Extruder 5 ist ein erstes Rheometer 10 angeordnet, welches die Viskosität der Schmelze an diesem Ort misst. Gleichermaßen ist hinter dem zweiten Extruder 5 ein zweites Rheometer 11 angeordnet, welches gleichermaßen die Viskosität der Schmelze misst.

Die Viskosität der Schmelze an den jeweiligen Orten der beiden Rheometer 10, 11 kann im geschlossenen Regelkreis bei der Steuerung der Anlage berücksichtigt werden, um insbesondere auf den Unterdruck in der Vakuumschleuse 1 Einfluss zu nehmen und so sicherzustellen, dass die Schmelze S die Anlage mit einer definierten Qualität verlässt.

Somit kann ausgehend von Material M in Form von Granulat oder Rezyklat (insbesondere in Form von Flaschen- oder Folienmahlgut) die Herstellung von Granulat, von Folien, von Fasern, von Filamenten oder von anderen Kunststoffprodukten und Halbzeugen erfolgen.

Die Kaskadenextrusion kann erweitert werden, indem beispielsweise ein weiterer Filter zwischen erstem und zweitem Extruder implementiert wird. Ebenso kann anstatt eines Einschneckenextruders auch ein gleichlaufender Doppelschneckenextruder als erster Extruder 2 verwendet werden.

### Bezugszeichenliste:

- 1: Vakuumschleuse
- 2: erster Extruder
- 3: Einfüllbereich des ersten Extruders
- 4: Einzugszone des ersten Extruders
- 5: zweiter Extruder
- 6: Entgasungszone des zweiten Extruders
- 7: Meteringzone des zweiten Extruders
- 8: Dosierelement
- 9: Filter
- 10: erstes Rheometer
- 11: zweites Rheometer
- 12: Düse
- 13: Einfülltrichter
- 14: Antriebsmotor
- 15: Antriebsmotor
- 16: Getriebe
- 17: Antriebsmotor
- 18: Getriebe
- 19: Schieber
- 20: Schieber

- M: Ausgangsmaterial (Granulat, Recyklat)
- G: Gas
- S: Schmelze

## Patentansprüche

1. Verfahren zur Verarbeitung von Polykondensaten, insbesondere von Polyethylenterephthalat, mit dem das Material (M) in Form von Granulat oder in Form von Rezyklat zu einer Schmelze verarbeitet wird, wobei das Verfahren die Abfolge der folgenden Schritte umfasst:
a) Zuführen des Materials (M) in eine Vakuumschleuse (1), in der das Material unter einem gegenüber dem Umgebungsdruck verminderten Druck gehalten wird;
b) Fördern des Materials von der Vakuumschleuse (1) in einen ersten Extruder (2), der einen Einfüllbereich (3) und eine Einzugszone (4) aufweist, wobei der Einfüllbereich (3) und die Einzugszone (4) unter einem gegenüber dem Umgebungsdruck verminderten Druck gehalten wird und wobei das Material im ersten Extruder (2) zumindest teilweise, vorzugsweise vollständig, aufgeschmolzen wird;
c) Fördern des zumindest teilweise aufgeschmolzenen Materials vom ersten Extruder (2) in einen zweiten Extruder (5), wobei der zweite Extruder (5) als Doppelschneckenextruder ausgeführt ist und die beiden Schnecken des zweiten Extruders (5) gegensinnig gedreht werden, wobei der zweite Extruder (5) zumindest eine Entgasungszone (6) und eine sich in Förderrichtung anschließende Meteringzone (7) aufweist, wobei in der Entgasungszone (6) das aufgeschmolzene Material entgast wird und das aufgeschmolzene Material in der Meteringzone (7) unter Druck gesetzt und aus dem zweiten Extruder (5) ausgebracht wird.

2. Verfahren nach Anspruch 1, **dadurch gekennzeichnet, dass** zwischen der Vakuumschleuse (1) und dem ersten Extruder (2) ein Dosierelement (8) angeordnet ist, wobei das Material von der Vakuumschleuse (1) in den ersten Extruder (2) mit einem vorgegebenen Massen- oder Volumenstrom gefördert wird.

3. Verfahren nach Anspruch 2, **dadurch gekennzeichnet, dass** das Material vom Dosierelement (8) in den ersten Extruder (2) mit einem solchen Massen- oder Volumenstrom gefördert wird, dass die Einzugszone (4) des ersten Extruders (2) nicht vollständig mit Material gefüllt ist, vorzugsweise mit höchstens 95 % der maximalen Füllmenge, besonders bevorzugt mit höchstens 90 % der maximalen Füllmenge.

4. Verfahren nach einem der Ansprüche 1 bis 3, **dadurch gekennzeichnet, dass** der Druck in der Vakuumschleuse (1) und/oder im Einfüllbereich (3) des ersten Extruders (2) maximal 100 mbar beträgt, vorzugsweise zwischen 0,1 mbar und 10 mbar.

5. Verfahren nach einem der Ansprüche 1 bis 4, **dadurch gekennzeichnet, dass** der Druck in der Entgasungszone (6) des zweiten Extruders (5) maximal 100 mbar beträgt, vorzugsweise maximal 30 mbar.

6. Verfahren nach einem der Ansprüche 1 bis 5, **dadurch gekennzeichnet, dass** als erster Extruder (2) ein Einschneckenextruder verwendet wird.

7. Verfahren nach einem der Ansprüche 1 bis 6, **dadurch gekennzeichnet, dass** das Material zwischen dem ersten Extruder (2) und dem zweiten Extruder (5) gefiltert wird.

8. Verfahren nach einem der Ansprüche 1 bis 7, **dadurch gekennzeichnet, dass** das Material nach dem zweiten Extruder (5) gefiltert wird.

9. Verfahren nach einem der Ansprüche 1 bis 8, **dadurch gekennzeichnet, dass** die Viskosität des Materials zwischen dem ersten Extruder (2) und dem zweiten Extruder (5) mittels eines Rheometers (10) gemessen wird.

10. Verfahren nach einem der Ansprüche 1 bis 9, **dadurch gekennzeichnet, dass** die Viskosität des Materials hinter dem zweiten Extruder (5) mittels eines Rheometers (11) gemessen wird.

11. Verfahren nach Anspruch 9 oder 10, **dadurch gekennzeichnet, dass** in Abhängigkeit der gemessenen Viskosität des Materials hinter dem ersten Extruder (2) und/oder hinter dem zweiten Extruder (5) mindestens ein Prozessparameter verändert wird, vorzugsweise im geschlossenen Regelkreis.

12. Verfahren nach Anspruch 11, **dadurch gekennzeichnet, dass** der Prozessparameter der Unterdruck im Einfüllbereich (3) und/oder in der Einzugszone (4) des ersten Extruders (2) ist.

13. Verfahren nach Anspruch 11, **dadurch gekennzeichnet, dass** der Prozessparameter der Unterdruck in der Entgasungszone (6) des zweiten Extruders (5) ist.

14. Verfahren nach einem der Ansprüche 1 bis 13, **dadurch gekennzeichnet, dass** hinter dem zweiten Extruder (5) ein Mittel zur Erhöhung des Drucks, insbesondere eine Schmelzepumpe, angeordnet ist und der Druck im Material mit diesem Mittel erhöht wird.

15. Verfahren nach einem der Ansprüche 1 bis 14, **dadurch gekennzeichnet, dass** das Material vor der Zuführung des Materials in die Vakuumschleuse (1) getrocknet wird, insbesondere mittels eines Vakuumtrockners oder eines Infrarot-Trockners.

16. Verfahren nach einem der Ansprüche 1 bis 15, **dadurch gekennzeichnet, dass** nach der Zuführung des Materials in die Vakuumschleuse (1) eine Erhöhung der Viskosität des Materials durch Polykondensation im festen Zustand (SSP) vorgenommen wird.

17. Verfahren nach einem der Ansprüche 1 bis 16, **dadurch gekennzeichnet, dass** nach dem Aufschmelzen des Materials im ersten Extruder (2) und/oder im zweiten Extruder (5) eine Erhöhung der Viskosität des Materials durch Polykondensation im flüssigen Zustand (LSP) vorgenommen wird.

18. Vorrichtung zur Verarbeitung von Polykondensaten, insbesondere von Polyethylenterephthalat, mit dem das Material (M) in Form von Granulat oder in Form von Rezyklat zu einer Schmelze verarbeitet werden kann, umfassend:
- einen ersten Extruder (2), der einen Einfüllbereich (3) und eine Einzugszone (4) aufweist, und
- einen dem ersten Extruder (2) nachgelagerten zweiten Extruder (5), wobei der zweite Extruder (5) als Doppelschneckenextruder ausgeführt ist und wobei der zweite Extruder (5) zumindest eine Entgasungszone (6) aufweist,
**gekennzeichnet durch**
- eine Vakuumschleuse (1), in der das Material unter einem gegenüber dem Umgebungsdruck verminderten Druck gehalten werden kann, wobei der erste Extruder (2) der Vakuumschleuse (1) nachgelagert ist,
- wobei im zweiten Extruder (5) die beiden Schnecken zum gegensinnigen Drehen ausgebildet sind und wobei der zweite Extruder (5) eine sich der Entgasungszone (6) in Förderrichtung anschließende Meteringzone (7) aufweist.

19. Vorrichtung nach Anspruch 18, **dadurch gekennzeichnet, dass** zwischen der Vakuumschleuse (1) und dem ersten Extruder (2) ein Dosierelement (8) zum Fördern des Materials mit vorgegebenem Massen- oder Volumenstrom angeordnet ist.

20. Vorrichtung nach einem Anspruch 18 oder 19, **dadurch gekennzeichnet, dass** der erste Extruder (2) ein Einschneckenextruder ist.

21. Vorrichtung nach einem der Ansprüche 18 bis 20, **dadurch gekennzeichnet, dass** zwischen dem ersten Extruder (2) und dem zweiten Extruder (5) ein Filter angeordnet ist.

22. Vorrichtung nach einem der Ansprüche 18 bis 21, **dadurch gekennzeichnet, dass** hinter dem zweiten Extruder (5) ein Filter (9) angeordnet ist.

23. Vorrichtung nach einem der Ansprüche 18 bis 22, **dadurch gekennzeichnet, dass** zwischen dem ersten Extruder (2) und dem zweiten Extruder (5) ein Rheometer (10) zur Messung der Viskosität des Materials angeordnet ist.

24. Vorrichtung nach einem der Ansprüche 18 bis 23, **dadurch gekennzeichnet, dass** hinter dem zweiten Extruder (5) ein Rheometer (11) zur Messung der Viskosität des Materials angeordnet ist.

25. Vorrichtung nach einem der Ansprüche 18 bis 24, **dadurch gekennzeichnet, dass** hinter dem zweiten Extruder (5) ein Mittel zur Erhöhung des Drucks, insbesondere eine Schmelzepumpe, angeordnet ist.

## Claims

1. Method for processing polycondensates, especially polyethylene terephthalate, wherein the material (M) in the form of granules or in the form of recyclate is processed to form a melt, wherein the method comprises the following steps:
a) feeding the material (M) into a vacuum lock (1) in which the material is held at a pressure lower than the atmospheric pressure;
b) conveying the material from the vacuum lock (1) into a first extruder (2) that has a filling region (3) and a feed zone (4), wherein the filling region (3) and the feed zone (4) are held at a pressure lower than the atmospheric pressure and wherein the material is at least partially, preferably completely, melted in the first extruder (2);
c) conveying the at least partially melted material from the first extruder (2) into a second extruder (5), wherein the second extruder (5) is designed as a twin-screw extruder and the two screws thereof are turned in the opposite direction, wherein the second extruder (5) comprises at least one degassing zone (6) and a metering zone (7) that follows in the conveying direction, wherein the melted material is degassed in the degassing zone (6) and the melted material is pressurised in the metering zone and is output out of the second extruder (5).

2. Method according to claim 1, **characterized in that** a metering element (8) is arranged between the vacuum lock (1) and the first extruder (2), wherein the material being conveyed from the vacuum lock (1) into the first extruder (2) at a predetermined mass or volume flow.

3. Method according to claim 2, **characterized in that** the material is conveyed from the metering element (8) into the first extruder (2) with such a mass or volume flow that the feed zone (4) of the first extruder (2) is not completely filled with material, preferably with at most 95 % of the maximum filling quantity, particularly preferably with at most 90 % of the maximum filling quantity.

4. Method according to one of claims 1 to 3, **characterized in that** the pressure in the vacuum lock (1) and/or in the filling region (3) of the first extruder (2) is at most 100 mbar, preferably between 0.1 mbar and 10 mbar.

5. Method according to one of claims 1 to 4, **characterized in that** the pressure in the degassing zone (6) of the second extruder (5) is at most 100 mbar, preferably at most 30 mbar.

6. Method according to one of claims 1 to 5, **characterized in that** a single-screw extruder is used as the first extruder (2).

7. Method according to one of claims 1 to 6, **characterized in that** the material is filtered between the first extruder (2) and the second extruder (5).

8. Method according to one of claims 1 to 7, **characterised in that** the material is filtered after the second extruder (5).

9. Method according to one of claims 1 to 8, **characterized in that** the viscosity of the material between the first extruder (2) and the second extruder (5) is measured by means of a rheometer (10).

10. Method according to one of claims 1 to 9, **characterized in that** the viscosity of the material downstream of the second extruder (5) is measured by means of a rheometer (11).

11. Method according to claim 9 or 10, **characterised in that**, depending on the measured viscosity of the material downstream of the first extruder (2) and/or downstream of the second extruder (5), at least one process parameter is changed, preferably in a closed control loop.

12. Method according to claim 11, **characterised in that** the process parameter is the negative pressure in the filling region (3) and/or in the feed zone (4) of the first extruder (2).

13. Method according to claim 11, **characterized in that** the process parameter is the negative pressure in the degassing zone (6) of the second extruder (5).

14. Method according to one of claims 1 to 13, **characterised in that** means for increasing the pressure, in particular a melt pump, is arranged downstream of the second extruder (5) and the pressure in the material is increased by this means.

15. Method according to one of claims 1 to 14, **characterised in that** the material is dried before the material is fed into the vacuum lock (1), in particular by means of a vacuum dryer or an infrared dryer.

16. Method according to one of claims 1 to 15, **characterized in that**, after the material has been fed into the vacuum lock (1), an increase in the viscosity of the material is carried out by solid state polycondensation (SSP).

17. Method according to one of claims 1 to 16, **characterized in that**, after melting the material in the first extruder (2) and/or in the second extruder (5), the viscosity of the material is increased by liquid state polycondensation (LSP).

18. Device for processing polycondensates, in particular polyethylene terephthalate, with which the material (M) can be processed into a melt in the form of granulate or in the form of recyclate, comprising:
- a first extruder (2) comprising a filling region (3) and a feed zone (4), and
- a second extruder (5) downstream of the first extruder (2), wherein the second extruder (5) being designed as a twin-screw extruder and the second extruder (5) having at least one degassing zone (6),
**characterized by**
- a vacuum lock (1) in which the material can be kept under a reduced pressure compared to the atmospheric pressure, wherein the first extruder (2) being downstream of the vacuum lock (1),
- wherein in the second extruder (5) the two screws are designed to rotate in opposite directions and wherein the second extruder (5) has a metering zone (7) following the degassing zone (6) in the conveying direction.

19. Device according to claim 18, **characterised in that** a metering element (8) for conveying the material with a predetermined mass or volume flow is arranged between the vacuum lock (1) and the first extruder (2).

20. Device according to claim 18 or 19, **characterized in that** the first extruder (2) is a single-screw extruder.

21. Device according to one of claims 18 to 20, **characterized in that** a filter is arranged between the first extruder (2) and the second extruder (5).

22. Device according to one of claims 18 to 21, **characterised in that** a filter (9) is arranged downstream of the second extruder (5).

23. Device according to one of claims 18 to 22, **characterized in that** a rheometer (10) for measuring the viscosity of the material is arranged between the first extruder (2) and the second extruder (5).

24. Device according to one of claims 18 to 23, **characterized in that** a rheometer (11) for measuring the viscosity of the material is arranged downstream of the second extruder (5).

25. Device according to one of claims 18 to 24, **characterized in that** means for increasing the pressure, in particular a melt pump, are arranged downstream of the second extruder (5).

## Revendications

1. Procédé de traitement de polycondensats, notamment de téréphtalate de polyéthylène, qui permet de transformer le matériau (M), se présentant sous la forme de granulés ou sous forme d'un recyclât, en une masse fondue ; le procédé comprenant la succession d'étapes suivantes :
a) amener le matériau (M) jusque dans un sas à vide (1) dans lequel le matériau est maintenu à une pression réduite par rapport à la pression ambiante ;
b) transporter le matériau du sas à vide (1) jusque dans une première extrudeuse (2) qui comporte une zone de remplissage (3) et une zone d'alimentation (4), la zone de remplissage (3) et la zone d'alimentation (4) étant maintenues à une pression réduite par rapport à la pression ambiante et le matériau situé dans la première extrudeuse (2) étant au moins partiellement, de préférence complètement, fondu ;
c) transporter le matériau au moins partiellement fondu de la première extrudeuse (2) jusque dans une deuxième extrudeuse (5), la deuxième extrudeuse (5) étant réalisée sous la forme d'une extrudeuse à double vis sans fin et les deux vis sans fin de la deuxième extrudeuse (5) tournant dans des sens opposés, la deuxième extrudeuse (5) comportant au moins une zone de dégazage (6) et une zone de dosage (7) qui suit dans la direction de transport, le matériau fondu étant dégazé dans la zone de dégazage (6) et le matériau fondu étant mis sous pression dans la zone de dosage (7) et déchargé de la deuxième extrudeuse (5).

2. Procédé selon la revendication 1, **caractérisé en ce qu'**un élément de dosage (8) est disposé entre le sas à vide (1) et la première extrudeuse (2), le matériau étant transporté du sas à vide (1) jusque dans la première extrudeuse (2) avec un débit massique ou volumique spécifié.

3. Procédé selon la revendication 2, **caractérisé en ce que** le matériau est transporté de l' élément doseur (8) jusque dans la première extrudeuse (2) avec un débit massique ou volumique tel que la zone d'alimentation (4) de la première extrudeuse (2) n'est pas rempli complètement de matériau, de préférence est rempli au plus à 95 % de la capacité de remplissage maximale, de manière particulièrement préférée au à plus 90 % de la capacité de remplissage maximale.

4. Procédé selon l'une des revendications 1 à 3, **caractérisé en ce que** la pression dans le sas à vide (1) et/ou dans la zone de remplissage (3) de la première extrudeuse (2) est au maximum de 100 mbar, de préférence est comprise entre 0,1 mbar et 10 mbar.

5. Procédé selon l'une des revendications 1 à 4, **caractérisé en ce que** la pression dans la zone de dégazage (6) de la deuxième extrudeuse (5) est au maximum de 100 mbar, de préférence au maximum de 30 mbar.

6. Procédé selon l'une des revendications 1 à 5, **caractérisé en ce qu'**une extrudeuse à une seule vis sans fin est utilisée comme première extrudeuse (2).

7. Procédé selon l'une des revendications 1 à 6, **caractérisé en ce que** le matériau est filtré entre la première extrudeuse (2) et la deuxième extrudeuse (5).

8. Procédé selon l'une des revendications 1 à 7, **caractérisé en ce que** le matériau est filtré après la deuxième extrudeuse (5).

9. Procédé selon l'une des revendications 1 à 8, **caractérisé en ce que** la viscosité du matériau entre la première extrudeuse (2) et la deuxième extrudeuse (5) est mesurée au moyen d'un rhéomètre (10).

10. Procédé selon l'une des revendications 1 à 9, **caractérisé en ce que** la viscosité du matériau en aval de la deuxième extrudeuse (5) est mesurée au moyen d'un rhéomètre (11).

11. Procédé selon la revendication 9 ou 10, **caractérisé en ce qu'**au moins un paramètre de processus est modifié, de préférence dans une boucle de régulation fermée, en fonction de la viscosité mesurée du matériau en aval de la première extrudeuse (2) et/ou en aval de la deuxième extrudeuse (5).

12. Procédé selon la revendication 11, **caractérisé en ce que** le paramètre de processus est la dépression dans la zone de remplissage (3) et/ou dans la zone d'alimentation (4) de la première extrudeuse (2).

13. Procédé selon la revendication 11, **caractérisé en ce que** le paramètre de processus est la dépression dans la zone de dégazage (6) de la deuxième extrudeuse (5).

14. Procédé selon l'une des revendications 1 à 13, **caractérisé en ce qu'**un moyen destiné à augmenter la pression, notamment une pompe à masse fondue, est disposé en aval de la deuxième extrudeuse (5), et la pression dans le matériau est augmentée avec ce moyen.

15. Procédé selon l'une des revendications 1 à 14, **caractérisé en ce que** le matériau est séché avant d'être amené jusque dans le sas à vide (1), notamment au moyen d'un sécheur sous vide ou d'un sécheur à infrarouge.

16. Procédé selon l'une des revendications 1 à 15, **caractérisé en ce qu'**après avoir amené le matériau jusque dans le sas à vide (1), la viscosité du matériau est augmentée par polycondensation à l'état solide (SSP).

17. Procédé selon l'une des revendications 1 à 16, **caractérisé en ce que**, après avoir fait fondre le matériau dans la première extrudeuse (2) et/ou dans la deuxième extrudeuse (5), la viscosité du matériau est augmentée par polycondensation. à l'état liquide (LSP).

18. Dispositif de traitement de polycondensats, notamment de téréphtalate de polyéthylène, qui permet de transformer le matériau (M) se présentant sous la forme de granulés ou sous la forme de recyclât en une masse fondue, ledit dispositif comprenant :
- une première extrudeuse (2) qui comporte une zone de remplissage (3) et une zone d'alimentation (4), et
- une deuxième extrudeuse (5) qui est montée en aval de la première extrudeuse (2), la deuxième extrudeuse (5) étant conçue comme une extrudeuse à double vis sans fin et la deuxième extrudeuse (5) comportant au moins une zone de dégazage (6),
**caractérisé par**
- un sas à vide (1) dans lequel le matériau peut être maintenu à une pression réduite par rapport à la pression ambiante, la première extrudeuse (2) étant montée en aval du sas à vide (1),
- les deux vis sans fin de la deuxième extrudeuse (5) étant conçues pour tourner dans des sens opposés et la deuxième extrudeuse (5) comportant une zone de dosage (7) à la suite delà zone de dégazage (6) dans le sens de transport.

19. Dispositif selon la revendication 18, **caractérisé en ce qu'**un élément doseur (8) destiné à transporter le matériau à un débit massique ou volumique spécifié est disposé entre le sas à vide (1) et la première extrudeuse (2).

20. Dispositif selon la revendication 18 ou 19, **caractérisé en ce que** la première extrudeuse (2) est une extrudeuse à une seule vis sans fin.

21. Dispositif selon l'une des revendications 18 à 20, **caractérisé en ce qu'**un filtre est disposé entre la première extrudeuse (2) et la deuxième extrudeuse (5).

22. Dispositif selon l'une des revendications 18 à 21, **caractérisé en ce qu'**un filtre (9) est disposé en aval de la deuxième extrudeuse (5).

23. Dispositif selon l'une des revendications 18 à 22, **caractérisé en ce qu'**un rhéomètre (10) destiné à mesurer la viscosité du matériau est disposé entre la première extrudeuse (2) et la deuxième extrudeuse (5).

24. Dispositif selon l'une des revendications 18 à 23, **caractérisé en ce qu'**un rhéomètre (11) destiné à mesurer la viscosité du matériau est disposé en aval de la deuxième extrudeuse (5).

25. Dispositif selon l'une des revendications 18 à 24, **caractérisé en ce qu'**un moyen destiné à augmenter la pression, notamment une pompe à masse fondue, est disposé en aval de la deuxième extrudeuse (5).
